Europäisches Patentamt

European Patent Office

Office européen des brevets

(11) Publication number: **0 491 467 A1**

## EUROPEAN PATENT APPLICATION

(21) Application number: **91310468.3**

(22) Date of filing: **13.11.91**

(51) Int. Cl.5: **B01J 8/06**

(30) Priority: **17.12.90 US 628070**

(43) Date of publication of application:
**24.06.92 Bulletin 92/26**

(84) Designated Contracting States:
**DE FR GB**

(71) Applicant: **TEXACO CHEMICAL COMPANY**
**3040 Post Oak Boulevard**
**Houston, Texas 77056(US)**

(72) Inventor: **Trujillo, Sheldom Gilford**
**780 Maplewood**
**Vida, Texas 77662(US)**

(74) Representative: **Green, Mark Charles et al**
**Urquhart-Dykes & Lord, 91 Wimpole Street**
**London W1M 8AH(GB)**

(54) Catalyst retainer for a reactor tube.

(57) In a reactor tube 12 which contains a particulate catalyst 24, a retainer 26 is removably positioned in the tube exhaust port 23. The retainer 26 includes a head section 27 to support the catalyst bed 24 and a handle 31 which prohibits the retainer from being inserted too far into the tube 12. A deformed segment 34 of the retainer is shaped to engage the reactor tube inner wall to effectuate a frictional hold between retainer 26 and tube 12.

Fig.3.

The invention pertains to a reactor having one or more tubes for conducting a gaseous flow through a bed of a particulate solid material such as a particulated catalyst held within the tubes. The bed in one embodiment can include a particulated catalyst material that contacts the gas flow and prompts or supports a desired reaction.

The use of catalytic materials in reactors is a well known concept. Catalysts can assume many forms and characteristics depending on the function in a particular process or form of apparatus. Physically, the catalyst can be used in the form of rods, cylinders, powder, spheres, tubes, etc. In any instance, the catalyst material is usually aggregated into a compact though porous bed through which the gas, or even a liquid must pass to thereby enhance the desired reaction.

As with any catalyst, over a period of time it will lose its strength or effectiveness. The catalyst must therefore, after a sufficient degree of deterioration, be rejuvenated or be replaced.

Depending on the use to which it is applied, a reactor for treating a particular gas can be comprised of several thousand tubes each of which holds a small catalytic bed through which the gas flow will pass. The catalyst bed is maintained in the tube in a manner to allow the process gas to flow freely through it. In the instance of a reactor wherein the various gas conducting tubes are arranged in a general upright disposition, the catalyst bed must be held in place by a suitable yet convenient means. Said means will function to restrain the catalyst particles from being carried away on the gas stream, but will not hinder the treated gas flow.

When, after a period of usage, it becomes necessary to replace or rejuvenate the catalyst, normally the latter is removed from the gas conducting tubes. This of course necessitates closing down the process and the reactor, both of which steps can be time consuming and expensive.

One widely used means for retaining a catalyst bed in a gas conducting tube is through use of a coiled, spring-like member. The latter is inserted into the lower end of an upright reacted tube. The coils of the spring will support the catalytic bed and yet permit treated gas to flow through the spring's coiled openings.

Removal of the coiled retaining spring and subsequently the catalyst material from several thousand reactor tubes can be prolonged over a period of days. Further, special tooling is usually required to engage the retainer spring and to withdraw it from its position in a tube.

In the present invention, there is provided a metallic catalyst bed retainer which is self locking in the end of a reactor tube. The retainer is capable of partial insertion into either end of a reactor tube which holds a catalytic bed that will be exposed to a gaseous flow. The retainer is comprised of a retainer head which is urged into a position where it will accurately locate and support the catalytic bed, and may be made of a high temperature resistant material, e.g. metal.

The retainer head constitutes a gas permeable, partial barrier that can be perforated, and will permit gas flow, but will maintain the particulated bed in place even under high temperature conditions.

The retainer further includes an elongated shank which incorporates a deformed segment capable of being further deformed to stress this segment. When the retainer is registered in a reactor tube, the deformed segment will be incapable of entry unless the retainer is forcibly inserted into the tube. The application of this force to the resilient retainer will cause a deformed segment to initially resist, but with the further application of force, the deformed segment will further deform and eventually enter the tube.

A handle means at the shank lower end is shaped to be sufficiently long to prohibit entry of this part of the retainer into the reactor tube. Thus, when the handle abuts the tube end face, the retainer head will be at a proper location to properly locate the particulated bed.

The retainer handle which protrudes from the tube end can now facilitate removal of both retainer and subsequently the catalyst bed.

It is therefore an object of the invention to provide a removable retainer for a reactor tube through which a process gas is passed for the purpose of contacting a catalyst bed.

For a better understanding of the present invention and to show more clearly how it may be put into effect, reference will now be made to the accompanying drawings in which:-

Figure 1 is an elevation view in cross section illustrating a multi-tube reactor in which the disclosed catalyst retainer can be embodied;

Figure 2 is a segmentary view of the reactor's tube bundle with the reactor shell removed and prior to insertion of the catalyst retainer;

Figure 3 is a cross sectional view on an enlarged scale through line 3-3 in Figure 2 ; and

Figure 4 is a cross-sectional view taken along line 4-4 of Figure 3.

Referring to the drawings, a reactor 10 of the type shown is one wherein a reactor shell 11 encloses a series of parallel, gas conducting tubes 12. The latter are fastened within the enclosing shell 11 by two or more spaced apart tube sheets 13 and 14. The tube sheets extend outwardly to the shell wall, where they are sealed at fluid tight joints.

Reactor shell 11 is normally fabricated of steel having a sufficiently heavy wall to withstand the expected internal pressures and temperature. Upper tube sheet 13 is fastened to the shell 11 inner wall, defining an upper chamber 15 having an inlet 17 for receiving incoming process gas. Upon entering chamber 16, the gas will be under sufficient pressure to be urged through the spaced apart tubes 12.

The lower end of shell 11 includes a discharge chamber 16 defined between lower tube sheet 14 and the shell lower end cap 23. Upon leaving the respective tubes 12, process gas will enter discharge chamber 16 and be passed through discharge opening 18 into downstream equipment where the gas can undergo further treatment.

To accommodate a heating medium such as steam, hot water, or another hot gas, the central or tube chamber 19 of shell 11 is provided with at least one, and preferably with a plurality of inlet ports 21 and 22. Heating medium will be introduced into the shell by one or both of these inlet ports. After contacting the outer surfaces of the respective tubes 12, the heated medium will leave central chamber 19 by way of one or more discharge ports 20.

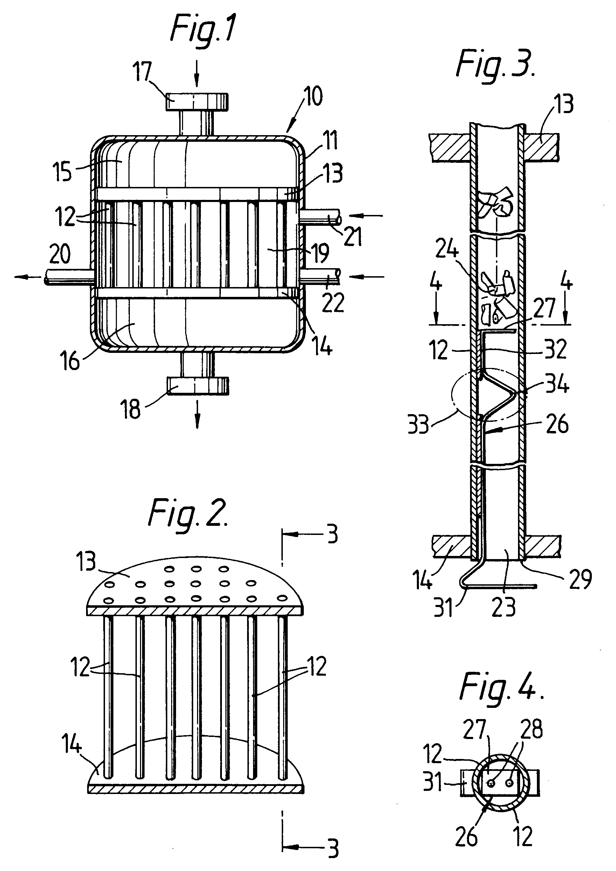

Referring to Figure 3, the normal construction of catalyst containing tubes 12 includes an upper end which is welded, soldered or otherwise sealed into openings formed in upper tube sheet 13. In a similar manner, the lower ends of the respective tubes 12 are sealed into lower tube sheet 14 thereby providing multiple passages communicating upper and lower chambers 15 and 16 respectively.

Conducting tubes 12 are normally fabricated of steel of a sufficient size and quality to function under the conditions of the incoming process gas, and the heating medium entering tube chamber 19. Each tube as noted, is furnished with a catalyst bed 24 which extends for a desired length in the tube to provide the necessary treating or contact period for gas which flows through bed 24.

As shown in Figure 3, catalyst bed 24 is comprised generally of a batch of cylindrical or other shaped, discrete units which are inserted into the top end of tube 12 to substantially fill the tube and thereby define the catalyst bed 24. These catalyst particles are designed and formed to provide the necessary flow paths for the process gas stream passing through the reactor tube.

The catalyst is maintained at a desired height above the lower face 29 of tube 12 by bed supporting retainer 26. Said member as shown includes primarily a retainer head 27 which, when retainer 26, is properly in place, is positioned transversely of tube's inner flow passage. To assure that gas flow is permitted through bed 24 and discharged from the tube 12 lower end, retainer head 27 can be provided with perforations 28 and its edges spaced from the contiguous inner walls of tube 12.

The lower end of retainer 26 is provided with a handle means 31 which, by its shape extends across the lower end of reactor tube 12 and in effect prohibits the retainer from being fully inserted into the tube. A lateral edge of handle 31 is shaped to engage the tube end face 29 thereby to properly locate retainer head 27.

Retainer head 27 and the handle means 31 are formed into a unit by an elongated shank 32 having upper and lower opposed ends. One end of the shank engages or forms head 27 to position the latter substantially normal to the path of the gaseous stream passing through the flow channel. The shank other or lower end engages or is shaped to become handle means 31.

Shank 32, as well as the entire retainer unit 26 is fabricated from a resilient metal such as spring steel or the like and is provided with a deformed segment 33. The latter serves the purpose of establishing a frictional lock by contact with the inner wall of tube 12. This frictional relationship will fix retainer 26 in place and maintain its position during the passage of process gas across the particulated bed.

Deformed segment 33 in one embodiment is shaped such that with shank 32 in abutment with one inner wall of tube 12, at least one part of the deformed segment 33 will be urged into tight engagement with the opposed face of said wall. Thus, with shank 32 in firm contact with inner wall of tube 12, the remote part or apex 34 of the deformed segment 33 will tightly engage the tube 12 inner wall to prohibit relative movement between the tube and retainer 26.

Referring to Figure 3, in one embodiment the deformed segment 33 of retainer 26 is comprised of a continuous part of the retainer which is fabricated to define a generally triangular shape. The apex 34 of the formed triangle defines a remote point in the deformed segment.

Functionally, when the retainer 26 is inserted into the reactor tube or discharge opening 28, the retainer head 27 will readily pass through the tube discharge port 18. However, when the deformed segment part 33 engages the lower end face 29 of tube 12, further entry of the retainer will be impeded unless the deformed segment is further deformed by application of pressure to the deformed triangular segment 33. Thus the apex 34 portion of the latter will be able to enter the tube under force. Further application of pressure against retainer 26 will allow it to be fully inserted into the tube until the lower positioned handle 31 engages tube end face 29 thereby permitting further movement of the retainer into the tube.

At this point in the operation, retainer head 27 will be at the desired height in tube 12 to support a subsequently applied catalyst bed 24.

When it becomes necessary or desirable to remove retainer 26 to facilitate replacement of catalyst bed 24, such removal requires merely the application of a sharp downward pull against the handle 31. Thus, although apex 34 of the deformed segment will maintain a degree of pressure against the tube 12 inner wall, the downward pull exerted against handle 31 will cause a disengagement of the retainer from its locked position thereby permitting the entire retainer to be slipped from tube discharge port or opening 18.

In a further embodiment of the shank deformed segment, the latter can be comprised primarily of a curved section having the remote end of the curve positioned to engage the tube inner wall for locking against the same.

To further assure ready access of retainer 26 into tube 12, the retainer 26 deformed segment 33 can be weakened by removal of sufficient metal to define a narrow portion along the deformed segment 33.

## Claims

1. A retainer for use in a catalyst reactor tube comprising a flow channel in which a particulate catalyst bed is retained for contacting a fluid stream flowing through said flow channel, characterised in that said retainer comprises

   a retainer head disposed transversely to the flow channel so as to support said catalyst bed,

   a handle means disposed externally to said tube, and

   an elongated shank connecting said retainer head and said handle, said elongated shank having a deformed segment which extends transversely of said flow channel, contacting opposite sides of the inner wall of said reactor tube, said deformed segment being maintained in a stressed condition whereby to resist longitudinal withdrawal of the retainer from the reactor tube.

2. A retainer as claimed in Claim 1 wherein said shank deformed segment includes a curved portion in contact with one side of the tube inner wall.

3. A retainer as claimed in Claim 1 or Claim 2 wherein said shank deformed segment includes at least one perforation to facilitate flow of the fluid stream therethrough.

4. A retainer as claimed in any one of Claims 1 to 3 wherein said handle means is sufficient in length to prohibit insertion thereof through the reactor tube.

5. A retainer as claimed in any one of Claims 1 to 4 wherein the deformed segment of said shank is contiguous with the handle means.

6. A retainer as claimed in any one of Claims 1 to 5 wherein the width of said elongated shank deformed segment is narrowed along at least a portion thereof.

Fig.1

Fig.2

Fig.3.

Fig.4.

European Patent
Office

EUROPEAN SEARCH REPORT

Application Number

EP   91 31 0468

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-2 203 840 (UNIVERSAL OIL PRODUCTS COMPANY) <br> * page 1, column 1, paragraph 1 * <br> * page 1, column 1, line 55 - page 2, column 1, line 56 * <br> * figures 1-3 * | 1 | B01J8/06 |
| A | OE-B-1 152 997 (DEGGENDORFER WERFT UND EISENBAU G.M.B.H.) <br> * column 1, paragraph 1 * <br> * column 1, paragraph 4 * <br> * column 3, line 26 - column 4, line 20 * <br> * figures 1-9 * | 1 | |
| A | FR-A-1 224 796 (SCIENTIFIC DESIGN COMPANY) <br> * page 1, column 1, paragraph 1 * <br> * page 2, column 1, paragraph 2 -paragraph 3 * <br> * page 2, column 2, paragraph 3 - page 3, column 1, paragraph 2 * <br> * figures 1-5 * | 1 | |
| A,P | US-A-5 015 446 (TEXACO CHEMICAL COMPANY) 14 May 1991 <br> ( filed 30-11-1989 ) <br> * abstract * <br> * figures 1-4 * <br> * column 2, line 26 - column 4, line 3 * | 1,4 | TECHNICAL FIELDS SEARCHED (Int. Cl.5 ) <br><br> B01J |

The present search report has been drawn up for all claims

| Place of search | Date of completion of the search | Examiner |
|---|---|---|
| THE HAGUE | 17 MARCH 1992 | SIEM T.O. |

EPO FORM 1503 03.82 (P0401)